# EUROPÄISCHE PATENTSCHRIFT

(11) **EP 3 253 953 B1**
(45) Veröffentlichungstag und Bekanntmachung des Hinweises auf die Patenterteilung: **30.01.2019**
(21) Anmeldenummer: 16703065.9
(22) Anmeldetag: 04.02.2016
(51) Int. Cl.: F01N 3/10, F01N 3/20, F01N 13/00, F02B 43/00

(54) **VERFAHREN ZUM BETREIBEN EINER BRENNKRAFTMASCHINE**
METHOD FOR OPERATING AN INTERNAL COMBUSTION ENGINE
PROCÉDÉ PERMETTANT DE FAIRE FONCTIONNER UN MOTEUR À COMBUSTION INTERNE

(30) Priorität: 05.02.2015 DE 102015001495
(43) Veröffentlichungstag der Anmeldung: 13.12.2017
(73) Patentinhaber: MAN Energy Solutions SE, 86153 Augsburg (DE)
(72) Erfinder: DÖRING, Andreas, 82008 Unterhaching (DE); TOSHEV, Plamen, 86159 Augsburg (DE)
(86) Internationale Anmeldenummer: PCT/EP2016/000186
(87) Internationale Veröffentlichungsnummer: WO 2016/124337

(56) Entgegenhaltungen:
- WO-A1-2010/147071
- CA-A1- 2 534 031
- DE-A1-102007 053 130
- US-A- 5 524 432

## Beschreibung

Die Erfindung betrifft ein Verfahren zum Betreiben einer Brennkraftmaschine, die eine Gasverbrennungssystem und ein Abgasnachbehandlungssystem aufweist. Des Weiteren betrifft die Erfindung eine Brennkraftmaschine, die ein Gasverbrennungssystem und ein Abgasnachbehandlungssystem aufweist.

Aus der Praxis sind Brennkraftmaschinen bekannt, die einen gasförmigen Kraftstoff, wie zum Beispiel Erdgas, verbrennen. Bei solchen Brennkraftmaschinen kann es sich zum Beispiel um Hubkolben-Brennkraftmaschinen oder auch um Strömungsmaschinen wie Gasturbinen handeln. So sind zum Beispiel aus dem Schiffsbau Brennkraftmaschinen bekannt, die Erdgas verbrennen und hierzu als Gasverbrennungssystem einen Gasmotor umfassen. Ferner umfassen solche Brennkraftmaschinen ein Abgasnachbehandlungssystem, um das Abgas, welches das Gasverbrennungssystem verlässt, zu reinigen. Bei Brennkraftmaschinen, die Erdgas verbrennen, kann es aufgrund einer unvollständigen Verbrennung des Erdgases zu unerwünschten Emissionen von CH₄ (Methan) kommen. Da Methan ein starkes Treibhausgas darstellt, ist die Emission von Methan in die Umgebung so gering wie möglich zu halten. Bei aus der Praxis bekannten Brennkraftmaschinen, die zum Beispiel Erdgas verbrennen, umfassen die jeweiligen Abgasnachbehandlungssysteme Katalysatoren, um CH₄ zu zersetzen. Dabei kommen nach der Praxis Katalysatoren zum Einsatz, die als katalytisch aktive Substanz insbesondere Metalle der Platinmetallgruppe, wie zum Beispiel Platin und/oder Palladium umfassen, wobei die Beladung eines solchen CH₄-Zersetzungskatalysators an einem Metall der Platinmetallgruppe typischerweise über 7 Gramm Edelmetall pro Liter Katalysatorvolumen beträgt. Hierdurch werden hohe Kosten verursacht. Weiterhin ist die Betriebszeit solcher Katalysatoren relativ gering, da dieselben durch Schwefeloxide, die über den Kraftstoff und/oder über Motoröl in das Abgasnachbehandlungssystem gelangen können, deaktiviert werden.

Bei aus der Praxis bekannten Brennkraftmaschinen, die einen gasförmigen Kraftstoff verbrennen, ist die Möglichkeit zur Reduktion von CH₄-Emissionen demnach beschränkt. Es besteht daher Bedarf an einer neuartigen Brennkraftmaschine und einem Verfahren zum Betreiben einer solchen Brennkraftmaschine, bei welcher CH₄-Emissionen stärker verringert bzw. reduziert werden können.

Die US 5 524 432 A offenbart bereits ein Verfahren zur Stickoxidreduzierung im Abgas einer mit Methan betriebenen Brennkraftmaschine

Hiervon ausgehend liegt der vorliegenden Erfindung die Aufgabe zugrunde, ein neuartiges Verfahren zum Betreiben einer Brennkraftmaschine die ein Gasverbrennungssystem und ein Abgasnachbehandlungssystem aufweist zu schaffen.

Diese Aufgabe wird durch ein Verfahren nach Anspruch 1 gelöst. Erfindungsgemäß wird das Abgas über mindestens einen CH₄-Oxidationskatalysator des Abgasnachbehandlungssystems geleitet, wobei der NO₂₋Anteil im Abgas durch mindestens eine gasverbrennungssystemseitige Maßnahme und/oder abgasnachbehandlungssystemseitige Maßnahme stromaufwärts mindestens eines CH₄-Oxidationskatalysators definiert eingestellt wird. Über die Einstellung des NO₂-Anteils im Abgas stromaufwärts des oder jedes CH₄-Oxidationskatalysators kann die Zersetzung von CH₄ verbessert werden, wodurch es möglich ist, CH₄-Emissionen einer Brennkraftmaschine zu reduzieren.

Vorzugsweise wird der NO₂-Anteil im Abgas so eingestellt, dass stromaufwärts mindestens eines der CH₄-Oxidationskatalysator der NO₂-Anteil an den Gesamtstickoxiden im Abgas mindestens 15%, bevorzugt mindestens 30%, besonders bevorzugt mindestens 50%, beträgt. Ein solcher NO₂-Anteil an den Gesamtstickoxiden im Abgas ist zur effektiven Reduktion von CH₄-Emissionen an Brennkraftmaschinen, die einen gasförmigen Kraftstoff wie zum Beispiel Erdgas verbrennen, besonders vorteilhaft.

Nach einer vorteilhaften Weiterbildung wird der NO₂-Anteil im Abgas über mindestens einen NO-Oxidationskatalysator des Abgasnachbehandlungssystems eingestellt, der stromaufwärts des oder jedes CH₄-Oxidationskatalysators angeordnet ist. Hiermit kann durch eine abgasnachbehandlungssystemseitige Maßnahme der NO₂-Anteil im Abgas einfach eingestellt werden.

Nach einer weiteren vorteilhaften Weiterbildung wird der NO₂-Anteil im Abgas durch Veränderung mindestens eines Betriebsparameters für das Gasverbrennungssystem eingestellt. Hierdurch kann durch eine gasverbrennungssystemseitige Maßnahme der NO₂-Anteil im Abgas besonders vorteilhaft eingestellt werden.

Vorzugsweise wird das Abgas der Brennkraftmaschine stromabwärts des oder jedes CH₄-Oxidationskatalysators über einen SCR-Katalysator geführt, wobei in das Abgas stromabwärts des SCR-Katalysators NH₃ oder eine NH₃-Vorläufersubstanz eingebracht wird. Über den SCR-Katalysator kann im Anschluss an die Zersetzung des CH₄ und demnach an die Reduktion der CH₄-Emissionen die Emission von NO₂ abgesenkt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematische Darstellung einer ersten Brennkraftmaschine;
- Fig. 2:: eine schematische Darstellung einer zweiten Brennkraftmaschine;
- Fig. 3:: eine schematische Darstellung einer dritten Brennkraftmaschine;
- Fig. 4:: eine schematische Darstellung einer vierten Brennkraftmaschine;
- Fig. 5:: eine schematische Darstellung einer fünften Brennkraftmaschine;
- Fig. 6:: eine schematische Darstellung einer sechsten Brennkraftmaschine;
- Fig. 7:: eine schematische Darstellung einer siebten Brennkraftmaschine;
- Fig. 8:: eine schematische Darstellung einer achten Brennkraftmaschine;
- Fig. 9:: eine schematische Darstellung einer neunten Brennkraftmaschine; und
- Fig. 10:: eine schematische Darstellung einer zehnten Brennkraftmaschine;

Die Erfindung betrifft ein Verfahren zum Betreiben einer Brennkraftmaschine, die ein Gasverbrennungssystem und ein Abgasnachbehandlungssystem aufweist.

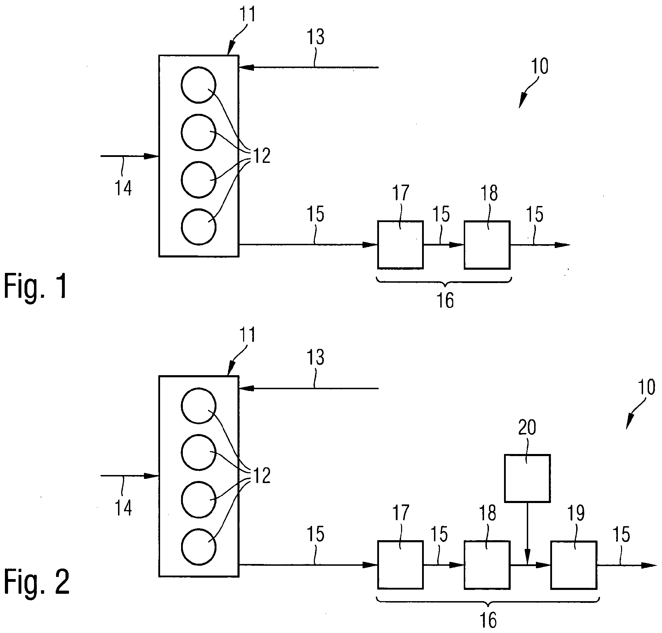

Nachfolgend wird die Erfindung unter Bezugnahme auf Fig. 1 bis 10 am Beispiel von Brennkraftmaschinen 10 beschrieben, die als Gasverbrennungssystem einen Gasmotor 11 mit Zylindern 12 umfassen, wobei den Zylindern 12 als Kraftstoff 14 insbesondere Erdgas und zusätzlich zum gasförmigen Kraftstoff 14 zur Verbrennung desselben Verbrennungsluft 13 zugeführt wird.

Hierbei entstehendes Abgas 15 wird vom Gasmotor 11 abgeleitet und über ein Abgasnachbehandlungssystem 16 geführt.

An dieser Stelle sei darauf hingewiesen, dass die Erfindung zwar vorzugsweise bei Brennkraftmaschinen zum Einsatz kommt, die als Gasverbrennungssystem einen Hubkolben-Gasmotor bzw. Otto-Gasmotor 12 nutzen, dieselbe kann jedoch auch bei Brennkraftmaschinen zum Einsatz kommen, deren Gasverbrennungssystem 11 von einer Strömungsmaschine wie zum Beispiel einer Gasturbine bereitgestellt wird.

Ein erstes Ausführungsbeispiel einer Brennkraftmaschine 10 zeigt Fig. 1, wobei im Ausführungsbeispiel der Fig. 1 das Abgasnachbehandlungssystem 16 einen CH₄-Oxidationskatalysator 18 und stromaufwärts des CH₄-Oxidationskatalysators 18 einen NO-Oxidationskatalysator 17 umfasst. Abgas 15, welches die Zylinder 12 des Gasmotors 11 der Brennkraftmaschine 10 der Fig. 1 verlässt, wird zunächst über den NO-Oxidationskatalysator 17 und anschließend über den CH₄-Oxidationskatalysator 18 geführt, wobei mit Hilfe des NO-Oxidationskatalysators 17 der NO₂-Anteil im Abgas 15 durch eine abgasnachbehandlungssystemseitige Maßnahme, nämlich durch das Führen des Abgases 15 über den NO-Oxidationskatalysator 17, definiert eingestellt wird. Hierdurch kann dann im CH₄-Oxidationskatalysator 18 eine besonders effektive CH₄-Zersetzung erfolgen, insbesondere dann, wenn über den NO-Oxidationskatalysator 17 der NO₂-Anteil im Abgas 15 stromaufwärts des CH₄-Oxidationskatalysators 18 so eingestellt wird, dass der NO₂-Anteil im Abgas an den Gesamtstickoxiden des Abgases mindestens 15 %, bevorzugt mindestens 30 %, besonders bevorzugt mindestens 50 %, beträgt. Wie weiter unten im Detail beschrieben wird, kann alternativ oder zusätzlich zu einer solchen abgasnachbehandlungssystemseitigen Maßnahme der NO₂-Anteil an den Gesamtstickoxiden im Abgas 15 auch über eine gasmotorseitige Maßnahme eingestellt werden.

Der NO-Oxidationskatalysator 17 nutzt als katalytisch aktive Substanz vorzugsweise ein Edelmetall der Platinmetallgruppe, wie zum Beispiel Platin und/oder Palladium, wobei die Beladung des NO-Oxidationskatalysators 17 mit diesem Edelmetall maximal 2,85 g/l Katalysatorvolumen beträgt, bevorzugt weniger als 2,5 g/l, besonders bevorzugt weniger als 1,75 g/l.

Im NO-Oxidationskatalysator 17 wird Stickoxid in Stickstoffdioxid nach folgender Gleichung umgesetzt:

2NO + O₂ →NO₂

Anschließend erfolgt im CH₄-Oxidationskatalysator 18 die Zersetzung von CH₄ nach folgender Reaktion:

NO₂ + CH₄ +O₂ →CO + NO + 2H₂O

Beim Betrieb der Brennkraftmaschine 10 wird das Verhältnis des zu zersetzenden CH₄ zu den Gesamtstickoxiden so eingestellt, dass das Verhältnis CH₄/NO₂ kleiner als 2, bevorzugt kleiner als 1,5, noch bevorzugter kleiner als 1 ist.

Wie bereits ausgeführt, enthält der NO-Oxidationskatalysator 17 als katalytisch aktive Substanz vorzugsweise ein Edelmetall wie Platin, insbesondere in einem Anteil zwischen 0,5 Gramm (g) / Liter Katalysatorvolumen (l) und 2,85 g/l, bevorzugt in einem Anteil zwischen 0,5 g/l und 2,5 g/l, höchst bevorzugt zwischen 0,5 g/l und 1,75 g/l.

Als Washcoat-Material enthält ein solcher NO-Oxidationskatalysator 17 vorzugsweise Al₂O₃ und/oder TiO₂.

Im CH₄-Oxidationskatalysator 18 kommen als Aktivkomponenten vorzugsweise Cer und/oder Kobalt und/oder Kupfer und/oder Eisen zum Einsatz. Diese sind vorzugsweise in eine Zeolithmatrix der Strukturen MOR, FER, PER, MFI (ZSME-5), LTL, LAU, CHI oder CHA eingebunden.

Eine Weiterbildung der Brennkraftmaschine 10 der Fig. 1 zeigt Fig. 2, wobei sich die Brennkraftmaschine 10 der Fig. 2 von der Brennkraftmaschine 10 der Fig. 1 dadurch unterscheidet, dass das Abgasnachbehandlungssystem 16 derselben stromabwärts des CH₄-Oxidationskatalysators 18 einen SCR-Katalysator 19 umfasst, welcher der Reduktion von NO₂-Emissionen dient. Stromaufwärts des SCR-Katalysators 19 ist eine Einrichtung 20 positioniert, über die NH₃ (Ammoniak) oder eine NH₃-Vorläufersubstanz, wie zum Beispiel Harnstoff, in das Abgas 15 stromaufwärts des SCR-Katalysators 19 eingebracht werden kann. Ammoniak dient im SCR-Katalysator 19 als Reduktionsmittel zur Verringerung der Stickoxide.

Dann, wenn in das Abgas eine NH₃-Vorläufersubstanz, wie zum Beispiel Harnstoff eingebracht wird, wird der Harnstoff im Abgas zu NH₃ umgesetzt, typischerweise nach folgender Reaktionsgleichung:

(NH₂)CO + H₂O→2NH₃ + CO₂

Da die Umsetzung von Harnstoff in NH₃ nach obiger Reaktionsgleichung typischerweise erst bei Abgastemperaturen in der Größenordnung von 450°C effektiv gelingt, kann stromaufwärts des SCR-Katalysators 19 ein Hydrolysekatalysator genutzt werden, um die Umsetzung der Ammoniakvorläufersubstanz, wie zum Beispiel Harnstoff, in NH₃ zu unterstützen.

In Hydrolysekatalysatoren erfolgt die Umsetzung von Harnstoff in NH₃ typischerweise nach folgenden Reaktionsgleichungen:

(NH₂)CO →NH₃ + HNCO

HNCO + H₂O→ NH₃ + CO₂

Die Umsetzung von Stickoxiden im SCR-Katalysator 19 unter Verwendung von NH₃ als Reduktionsmittel erfolgt dabei nach folgenden Reaktionsgleichungen:

4NO + 4NH₃ + O₂ →4N₂ + 6H₂O

10NH₃ + 6NO₂ + 3O₂ →8N₂ + 15H₂O

Als SCR-Katalysatoren 19 können V₂O₅-haltige SCR-Katalysatoren 19 verwendet werden, die z.B. V₂O₅/WO₃/TiO₂ Michoxide als Aktivkomponenten enthalten. Typische V₂O₅-Antei|e in SCR-Katalysatoren 19 liegen dabei zwischen 0,2%-3%. Als Aktivkomponenten können die SCR-Katalysatoren 19 auch TiO₂ und/oder SiO₂ und/oder Al₂O₃ und/oder Zeolithe nutzen.

Bei hohen Abgastemperaturen gestaltet sich der Einsatz von V₂O₅ als SCR-Aktivkomponente kritisch. Der Grund hierfür liegt in der geringen thermischen Stabilität. So kommt es bei Abgastemperatur von über 650°C zur Sublimation von V₂O₅. Für diese Hochtemperaturanwendungen werden V₂O₅-freie, übergangsmetallhaltige, insbesondere eisen-, kobalt- oder kupferhaltige SCR-Katalysatoren 19 eingesetzt. Als besonders vorteilhaft hat es sich in diesem Zusammenhang erwiesen, diese Übergangsmetalle durch lonenaustauch in Zeolithe zu integrieren. Auf Grund der sehr großen Oberfläche der Zeolithe gelingt dadurch eine erhebliche Vergrößerung der aktiven Oberfläche und damit eine deutliche Steigerung der erreichbaren SCR-Umsätze.

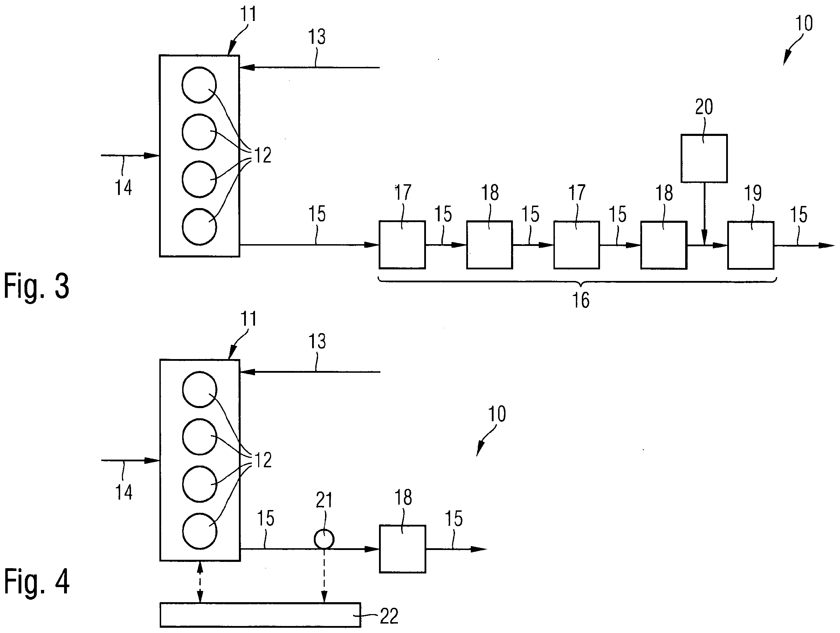

Eine Weiterbildung der Brennkraftmaschine 10 der Fig. 2 zeigt Fig. 3, wobei sich die Brennkraftmaschine 10 der Fig. 3 von der Brennkraftmaschine 10 der Fig. 2 dadurch unterscheidet, dass das Abgasnachbehandlungssystem 16 der Brennkraftmaschine 10 der Fig. 3 mehrere NO-Oxidationskatalysatoren 17 sowie mehrere CH₄-Oxidationskatalysatoren 18 umfasst.

So ist stromabwärts eines ersten NO-Oxidationskatalysators 17 ein erster CH₄-Oxidationskatalysator 18 und stromabwärts des ersten CH₄-Oxidationskatalysators 18 ein zweiter NO-Oxidationskatalysator 17 mit einem demselben nachgeordneten zweiten CH₄-Oxidationskatalysator 18 vorhanden. Durch die Ausführung wird das in dem CH₄-Oxidationskatalysator 18 zu NO reduzierte NO₂ wieder zu NO₂ oxidiert und steht somit am nachgeschalteten zweiten CH₄-Oxidationskatalysator wieder zur Verfügung.

Über eine derartig mehrstufige Oxidation von CH₄ können CH₄-Emissionen vorteilhaft weiter abgesenkt werden. Dabei ist es von Vorteil, stromaufwärts jedes CH₄-Oxidationskatalysators jeweils einen NO-Oxidationskatalysator 17 zu nutzen, um stromaufwärts jedes CH₄-Oxidationskatalysators 18 einen definierten NO₂-Anteil an den Gesamtstickoxiden im Abgas 15 einzustellen.

Die alternierende Abfolge von NO-Oxidationskatalysatoren und CH₄-Oxidationskatalysatoren kann über separate Katalysatorträger oder einen gemeinsamen Katalysatorträger realisiert werden, wie dieselben im letzteren Fall eine bauliche Einheit bilden. Bei wabenförmigen Katalysatoren können NO-Oxidationskatalysatoren und CH₄-Oxidationskatalysatoren alternierend über den Kanalumfang angeordnet werden.

Den Ausführungsbeispielen der Fig. 1 bis 3 ist gemeinsam, dass der NO₂-Anteil an den Gesamtstickoxiden im Abgas 15 stromaufwärts des jeweiligen CH₄-Oxidationskatalysators 18 über eine abgasnachbehandlungssystemseitige Maßnahme definiert eingestellt wird.

Demgegenüber zeigt Fig. 4 ein Ausführungsbeispiel einer Brennkraftmaschine 10, bei welcher der NO₂-Anteil im Abgas 15 stromaufwärts des CH₄-Oxidationskatalysators 18 über eine gasverbrennungssystemseitige Maßnahme, nämlich eine gasmotorseitige Maßnahme, definiert eingestellt wird, und zwar vorzugsweise wiederum derart, dass der NO₂-Anteil an den Gesamtstickoxiden im Abgas 15 mindestens 15 %, bevorzugt mindestens 30 %, besonders bevorzugt mindestens 50 %, beträgt.

Hierzu wird vorzugsweise mindestens ein Betriebsparameter des Gasmotors 11 angepasst, insbesondere ein Lambdawert und/oder ein Zündzeitpunkt und/oder Ventilsteuerzeiten und/oder eine Motorkompression und/oder ein Abgasanteil im Motorbrennraum.

Dann, wenn der Lambdawert reduziert wird, steigt tendenziell der NO₂-Anteil im Abgas. Ferner kann durch Verschieben des Zündzeitpunkts in Richtung frühere Zeitpunkte und/oder durch Erhöhung des Abgasanteils im Motorbrennraum der NO₂-Anteil im Abgas tendenziell erhöht werden. Ferner ist es möglich, durch späteres Öffnen von Einlassventilen der Zylinder 12 und durch späteres Schließen von Auslassventilen der Zylinder 12 den NO₂-Anteil im Abgas zu erhöhen. Durch Erhöhung der Motorkompression wird tendenziell der NO₂-Anteil im Abgas reduziert.

Um den NO₂-Anteil im Abgas 15 über eine gasmotorseitige Maßnahme gezielt einstellen zu können, wird vorzugsweise mit Hilfe eines Sensors 21 ein NO₂-Abgasistwert im Abgas 15 bestimmt, wobei eine Motorsteuerungseinrichtung 22 diesen NO₂-Abgasistwert mit einem NO₂-Abgassollwert vergleicht und abhängig hiervon mindestens einen Betriebsparameter für den Gasmotor 11 so verändert, dass der NO₂-Abgasistwert dem NO₂-Abgassollwert angenähert wird. Die Motorsteuerungseinrichtung 22 bestimmt dabei den NO₂-Abgassollwert vorzugsweise in Abhängigkeit mindestens eines Betriebsparameters des Gasmotors 11, vorzugsweise lastpunktabhängig.

Nach der Variante der Fig. 4 wird demnach vorgeschlagen, durch Veränderung mindestens eines Betriebsparameters für den Gasmotor 11 der Brennkraftmaschine 10 den NO₂₋Anteil im Abgas 15 stromaufwärts des CH₄-Oxidationskatalysators 18 definiert einzustellen, um so eine optimale Umsetzung von CH₄ im CH₄-Oxidationskatalysator 18 zu ermöglichen.

Der Betriebsparameter für den Gasmotor 11, auf Grundlage dessen Veränderung der NO₂-Anteil im Abgas 15 definiert eingestellt werden soll, wird dabei im Sinne einer Regelung als regelungstechnische Stellgröße auf Grundlage eines Sollwert-Istwert-Vergleichs bestimmt, wobei es sich beim Istwert und einen NO₂-Abgasistwert und bei dem Sollwert um einen NO₂-Abgassollwert handelt. Der NO₂-Abgassollwert wird dabei betriebspunktabhängig, insbesondere lastpunktabhängig, von der Motorsteuerungseinrichtung 22 automatisch bestimmt, wobei die Steuerungseinrichtung 22 als Stellgröße und demnach als Betriebsparameter für den Motor, vorzugsweise den Lambda-Wert und/oder den Zündzeitpunkt und/oder Ventilsteuerzeiten und/oder die Motorkompression und/oder den Abgasanteil im Motorbrennraum verändert, um den NO₂-Istwert dem NO₂-Sollwert anzunähern.

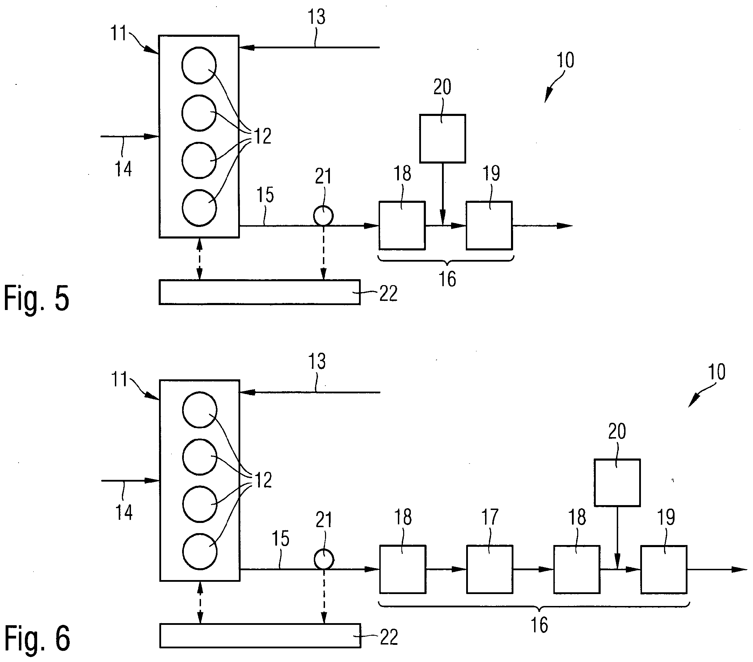

Fig. 5 zeigt eine Weiterbildung des Ausführungsbeispiels der Fig. 4, in welcher stromabwärts des CH₄-Oxidationskatalysators 18 ein SCR-Katalysator 19 positioniert ist, um in demselben Stickoxide unter Verwendung eines Reduktionsmittels, welches über die Einrichtung 20 in das Abgas stromaufwärts des SCR-Katalysators 19 eingebracht wird, umzusetzen, nämlich in Übereinstimmung zum Ausführungsbeispiel der Fig. 2, 3. Hinsichtlich der Details des SCR-Katalysators 19 und des Reduktionsmittels wird auf die obigen Ausführungen verwiesen.

Eine Weiterbildung der Brennkraftmaschine gemäß Fig. 5 zeigt Fig. 6, wobei in Fig. 6 eine Brennkraftmaschine 10 gezeigt ist, die zur Einstellung des NO₂-Anteils im Abgas 15 sowohl gasmotorseitige als auch abgasnachbehandlungssystemseitige Maßnahmen nutzt. So wird bei der Brennkraftmaschine der Fig. 6 der NO₂-Anteil im Abgas 15 stromaufwärts des ersten CH₄-Oxidationskatalysators 18 über eine gasmotorseitige Maßnahme, wie im Zusammenhang mit Fig. 5 beschrieben, eingestellt, die Einstellung des NO₂-Anteils im Abgas 15 stromaufwärts des zweiten CH₄-Oxidationskatalysators 18 erfolgt mit Hilfe einer abgasnachbehandlungssystemseitige Maßnahme eines NO-Oxidationskatalysators 17, der zwischen den beiden CH₄-Oxidationskatalysatoren 18 positioniert ist. Hinsichtlich der Details des NO-Oxidationskatalysators 17 wird auf die Ausführungen zu den Ausführungsbeispielen der Fig. 1 bis 3 verwiesen.

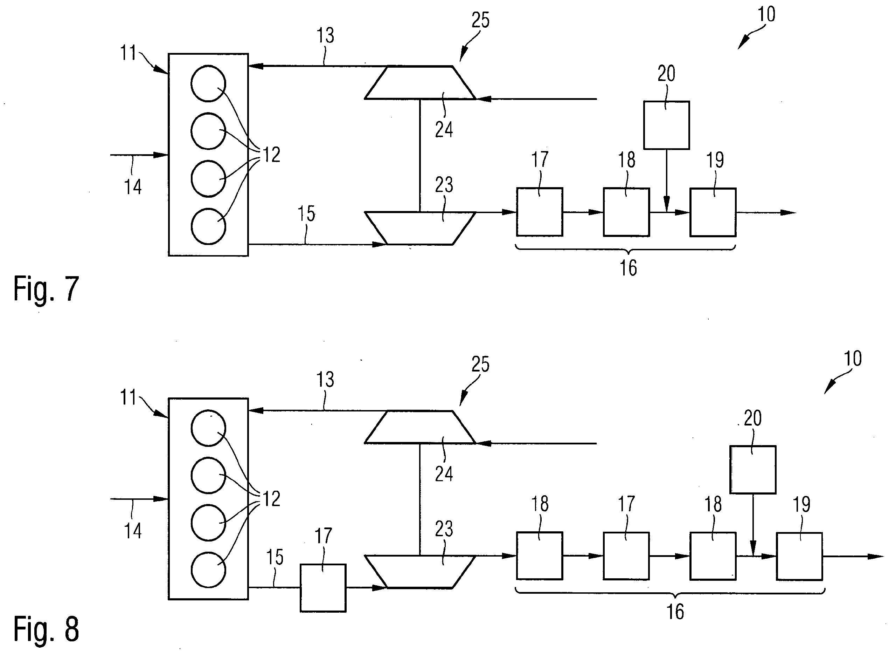

Weitere Ausführungsbeispiele von erfindungsgemäßen Brennkraftmaschinen 10 zeigen Fig. 7 bis 10, wobei sich die Ausführungsbeispiele der Fig. 7 bis 10 von den Ausführungsbeispielen der Fig. 1 bis 6 dadurch unterscheiden, dass der Gasmotor 11 als abgasaufgeladener bzw. turboaufgeladener Gasmotor 11 ausgebildet ist, dem also ein Abgasturbolader 25 mit einer Turbine 23 und einem Verdichter 24 zugeordnet ist.

In der Turbine 23 des Abgasturboladers 25 kann Abgas 15, welches den Gasmotor 11 verlässt, entspannt werden, um hierbei Energie zu gewinnen, die zum Antreiben des Verdichters 24 des Abgasturboladers 25 genutzt wird, wobei im Verdichter 24 den Zylindern 11 zuzuführende Verbrennungsluft 13 verdichtet wird.

So entspricht das Ausführungsbeispiel der Fig. 7 im Wesentlichen dem Ausführungsbeispiel der Fig. 2, mit dem Unterschied, dass das Abgas 15 stromaufwärts des NO-Oxidationskatalysators 17 über die Turbine 23 des Abgasturboladers 25 geführt wird.

Das Ausführungsbeispiel der Fig. 8 entspricht im Wesentlichen dem Ausführungsbeispiel der Fig. 3, jedoch wiederum mit dem Unterschied, dass dem Gasmotor 11 der Abgasturbolader 25 zugeordnet ist. Der NO-Oxidationskatalysator 17, der dem ersten CH₄-Oxidationskatalysator 18 vorgelagert ist, ist dabei stromaufwärts der Turbine 23 des Abgasturboladers 25 angeordnet, sodass demnach Abgas 15, welches die Zylinders 12 des Gasmotors 11 verlässt, zunächst über den ersten NO-Oxidationskatalysator 17 und erst anschließend über die Turbine 23 des Abgasturboladers 25 geführt wird.

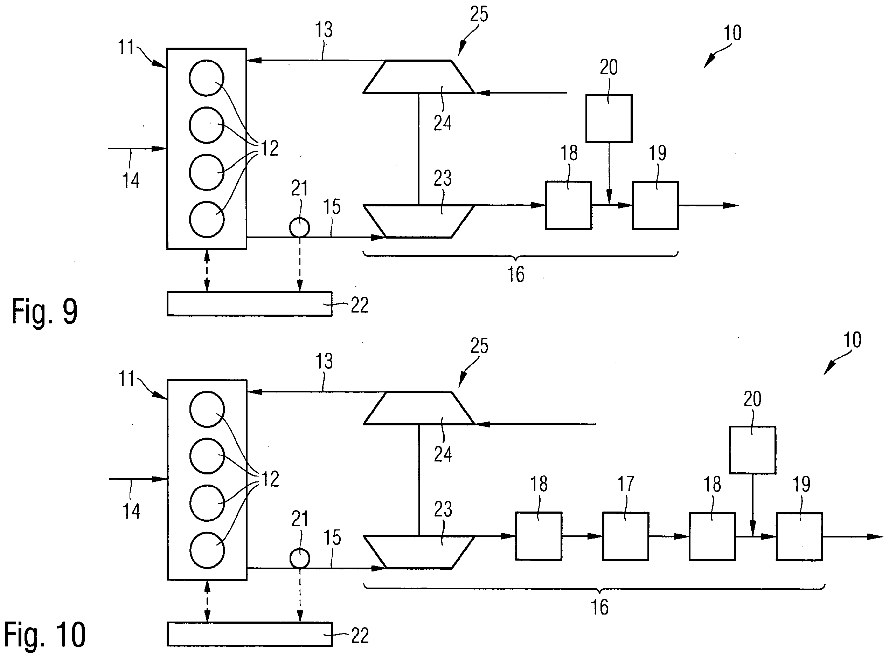

Das Ausführungsbeispiel der Fig. 9 entspricht im Wesentlichen dem Ausführungsbeispiel der Fig. 5, jedoch wiederum mit dem Unterschied, dass dem Gasmotor 11 ein Abgasturbolader 25 zugeordnet ist.

Das Abgas 15, dessen NO₂-Anteil in Fig. 9 über einen gasmotorseitigen Eingriff eingestellt wird, wird zunächst über die Turbine 23 des Abgasturboladers 25 geleitet, bevor dasselbe über den CH₄-Oxidationskatalysator 18 geführt wird.

Das Ausführungsbeispiel der Fig. 10 entspricht im Wesentlichen dem Ausführungsbeispiel der Fig. 6, jedoch wiederum unter Verwendung eines Abgasturboladers 25.

Mit den erfindungsgemäßen Brennkraftmaschinen und den oben beschriebenen Verfahren zum Betreiben derselben können CH₄-Emissionen an vorzugsweise mit Erdgas betriebenen Brennkraftmaschinen vorteilhaft reduziert werden. So wird über mindestens eine gasmotorseitige Maßnahme und/oder über mindestens eine abgassystemseitige Maßnahme der NO₂-Anteil im Abgas stromaufwärts mindestens eines CH₄-Oxidationskatalysators definiert eingestellt, um so eine optimale CH₄-Zersetzung zu gewährleisten.

### Bezugszeichenliste

- 10: Brennkraftmaschine
- 11: Gasverbrennungssystem
- 12: Zylinder
- 13: Verbrennungsluft
- 14: Kraftstoff
- 15: Abgas
- 16: Abgasnachbehandlungssystem
- 17: NO-Oxidationskatalysator
- 18: CH₄-Oxidationskatalysator
- 19: SCR-Katalysator
- 20: Einrichtung
- 21: Sensor
- 22: Motorsteuerungseinrichtung
- 23: Turbine
- 24: Verdichter
- 25: Abgasturbolader

## Patentansprüche

1. Verfahren zum Betreiben einer Brennkraftmaschine (10), die ein Gasverbrennungssystem (11) und ein Abgasnachbehandlungssystem (16) aufweist, wobei Abgas (15), welches das Gasverbrennungssystem (10) verlässt, zur Reinigung über das Abgasnachbehandlungssystem (16) geleitet wird, **dadurch gekennzeichnet, dass** das Abgas (15) über mindestens einen CH₄-Oxidationskatalysator (18) des Abgasnachbehandlungssystems (16) geleitet wird, und dass das CH4/NO₂-Mol-Verhältnis im Abgas (15) durch mindestens eine gasverbrennungssystemseitige und/oder abgasnachbehandlungssystemseitige Maßnahme stromaufwärts mindestens eines CH₄-Oxidationskatalysators (18) kleiner gleich 2, bevorzugt kleiner 1,5, höchst bevorzugt kleiner 1 eingestellt wird.

2. Verfahren nach Anspruch 1, **dadurch gekennzeichnet, dass** der NO₂-Anteil im Abgas (15) so eingestellt wird, dass stromaufwärts mindestens eines CH₄-Oxidationskatalysators (18) der NO₂-Anteil an den Gesamtstickoxiden im Abgas (15) mindestens 15%, bevorzugt mindestens 30%, besonders bevorzugt mindestens 50%, beträgt.

3. Verfahren nach Anspruch 1 oder 2, **dadurch gekennzeichnet, dass** der NO₂-Anteil im Abgas (15) über mindestens einen NO-Oxidationskatalysator (17) des Abgasnachbehandlungssystems (16) eingestellt wird, der stromaufwärts des oder jedes CH₄-Oxidationskatalysators (18) angeordnet ist.

4. Verfahren nach Anspruch 3, **dadurch gekennzeichnet, dass** das Abgas (15) über mehrere hintereinander positionierte CH₄-Oxidationskatalysatoren (18) und stromaufwärts der einzelnen CH₄-Oxidationskatalysatoren (18) über mindestens einen NO-Oxidationskatalysator (17) geleitet wird.

5. Verfahren nach einem der Ansprüche 1 bis 4, **dadurch gekennzeichnet, dass** der NO₂-Anteil im Abgas (15) durch Veränderung mindestens eines Betriebsparameters für das Gasverbrennungssystem (11) eingestellt wird.

6. Verfahren nach Anspruch 5, **dadurch gekennzeichnet, dass** als Betriebsparameter für das Gasverbrennungssystem (11) ein Lambdawert und/oder ein Zündzeitpunkt und/oder Ventilsteuerzeiten und/oder eine Motorkompression und/oder ein Abgasanteil im Motorbrennraum verändert wird.

7. Verfahren nach Anspruch 5 oder 6, **dadurch gekennzeichnet, dass** ein NO₂-Abgasistwert bestimmt wird, und dass mindestens ein Betriebsparameter für das Gasverbrennungssystem (11) derart verändert wird, dass der NO₂-Abgasistwert einem NO₂₋Abgassollwert angenähert wird.

8. Verfahren nach einem der Ansprüche 1 bis 7, **dadurch gekennzeichnet, dass** das Abgas stromabwärts des oder jedes CH₄-Oxidationskatalysators (18) über einen SCR-Katalysator (19) geführt wird, wobei in das Abgas stromabwärts des SCR-Katalysators (19) NH₃ oder eine NH₃-Vorläufersubstanz eingebracht wird.

## Claims

1. A method for operating an internal combustion engine (10), comprising a gas combustion system (11) and an exhaust gas after-treatment system (16), wherein exhaust gas (15) leaving the gas combustion system (10) is conducted for cleaning via the exhaust gas after-treatment system (16), **characterized in that** the exhaust gas (15) is conducted via at least one CH₄ oxidation catalytic converter (18) of the exhaust gas after-treatment system (16), and **in that** the CH_{4/}NO₂ mol ratio in the exhaust gas (15) is adjusted by at least one measure on the exhaust gas combustion system side and/or exhaust gas after-treatment system side upstream of at least one CH₄ oxidation catalytic converter (18) to be smaller than or equal to 2, preferably smaller than 1.5, most preferably smaller than 1.

2. The method according to Claim 1, **characterized in that** the NO₂ proportion in the exhaust gas (15) is adjusted so that upstream of at least one CH₄ oxidation catalytic converter (18) the NO₂ proportion in the total nitrogen oxides in the exhaust gas (15) amounts to at least 15%, preferably at least 30%, particularly preferably at least 50%.

3. The method according to Claim 1 or 2, **characterized in that** the NO₂ proportion in the exhaust gas (15) is adjusted via at least one NO oxidation catalytic converter (17) of the exhaust gas after-treatment system (16), which is arranged upstream of the or each CH₄ oxidation catalytic converter (18).

4. The method according to Claim 3, **characterized in that** the exhaust gas (15) is conducted via multiple CH₄ oxidation catalytic converters (18) that are positioned one behind the other and upstream of the individual CH₄ oxidation catalytic converters (18) via at least one NO oxidation catalytic converter (17).

5. The method according to any one of the Claims 1 to 4, **characterized in that** the NO₂ proportion in the exhaust gas (15) is adjusted by changing at least one operating parameter for the gas combustion system (11).

6. The method according to Claim 5, **characterized in that** as operating parameter for the gas combustion system (11) a lambda value and/or an ignition timing and/or valve timings and/or an engine compression and/or an exhaust gas proportion in the engine combustion chamber is changed.

7. The method according to Claim 5 or 6, **characterized in that** an NO₂ exhaust gas actual value is determined, and **in that** at least one operating parameter for the gas combustion system (11) is changed in such a manner that the NO₂ exhaust gas actual value is approximated to an NO₂ exhaust gas set point value.

8. The method according to any one of the Claims 1 to 7, **characterized in that** upstream of the or each CH₄ oxidation catalytic converter (18) the exhaust gas is conducted via an SCR catalytic converter (19), wherein upstream of the SCR catalytic converter (19) NH₃ or an NH₃ precursor substance is introduced.

## Revendications

1. Procédé de fonctionnement d'un moteur à combustion interne (10), qui présente un système de combustion de gaz (11) et un système de post-traitement de gaz d'échappement (16), dans lequel du gaz d'échappement (15), qui quitte le système de combustion de gaz (10), à des fins de purification est guidé par l'intermédiaire du système de post-traitement de gaz d'échappement (16), **caractérisé en ce que** le gaz d'échappement (15) est guidé par l'intermédiaire d'au moins un catalyseur d'oxydation de CH₄ (18) du système de post-traitement des gaz d'échappement (16), et **en ce que** le rapport molaire de CH₄/NO₂ dans le gaz d'échappement (15) est réglé par au moins une mesure du côté du système de combustion de gaz et/ou du système de post-traitement des gaz d'échappement en amont d'au moins un catalyseur d'oxydation de CH₄ (18) sur inférieur ou égal à 2, de préférence inférieur à 1,5, de manière la plus préférée sur inférieur à 1.

2. Procédé selon la revendication 1, **caractérisé en ce que** la fraction de NO₂ dans le gaz d'échappement (15) est réglée de sorte qu'en amont d'au moins un catalyseur d'oxydation de CH₄ (18) la fraction de NO₂ sur la totalité des oxydes d'azote dans les gaz d'échappement (15) s'élève au moins à 15%, de préférence au moins à 30%, de manière particulièrement préférée à au moins 50%.

3. Procédé selon la revendication 1 ou 2, **caractérisé en ce que** la fraction de NO₂ dans le gaz d'échappement (15) est réglée par l'intermédiaire d'au moins un catalyseur d'oxydation de NO (17) du système de post-traitement de gaz d'échappement (16), qui est disposé en amont du ou de chaque catalyseur d'oxydation de CH₄ (18).

4. Procédé selon la revendication 3, **caractérisé en ce que** le gaz d'échappement (15) est guidé par l'intermédiaire de plusieurs catalyseurs d'oxydation de CH₄ (18) positionnés l'un derrière l'autre et en amont des catalyseurs d'oxydation de CH₄ individuels (18) par l'intermédiaire d'au moins un catalyseur d'oxydation de NO (17).

5. Procédé selon une des revendications 1 à 4, **caractérisé en ce que** la fraction de NO₂ dans les gaz d'échappement (15) est réglée en modifiant au moins un paramètre de fonctionnement pour le système de combustion de gaz (11).

6. Procédé selon la revendication 5, **caractérisé en ce que** comme paramètre de fonctionnement pour le système de combustion de gaz (11) une valeur lambda et/ou un point temporel d'allumage et/ou des temps de commutation de soupape et/ou une compression de moteur et/ou une fraction de gaz d'échappement dans la chambre de combustion du moteur est modifiée.

7. Procédé selon la revendication 5 ou 6, **caractérisé en ce que** une valeur effective de gaz d'échappement de NO₂ est déterminée, et **en ce que** au moins un paramètre de fonctionnement pour le système de combustion de gaz (11) est modifié de telle sorte que la valeur effective de gaz d'échappement de NO₂ se rapproche d'une valeur de consigne de gaz d'échappement de NO₂.

8. Procédé selon une des revendications 1 à 7, **caractérisé en ce que** le gaz d'échappement est guidé en aval du ou de chaque catalyseur d'oxydation de CH₄ (18) par l'intermédiaire d'un catalyseur SCR (19), dans lequel dans le gaz d'échappement en aval du catalyseur de SCR (19), une substance NH₃ ou un précurseur de NH₃ est introduit.
